Europäisches Patentamt

European Patent Office

Office européen des brevets

(19)

(11) EP 0 829 941 A1

## (12) DEMANDE DE BREVET EUROPEEN

(43) Date de publication:
18.03.1998 Bulletin 1998/12

(51) Int Cl.6: **H02J 7/14**

(21) Numéro de dépôt: 97402133.9

(22) Date de dépôt: 15.09.1997

(84) Etats contractants désignés:
AT BE CH DE DK ES FI FR GB GR IE IT LI LU MC NL PT SE

(30) Priorité: 16.09.1996 FR 9611253

(71) Demandeur: VALEO EQUIPEMENTS ELECTRIQUES MOTEUR
94000 Créteil (FR)

(72) Inventeur: De Monts De Savasse, Antoine
14340 Cambremer (FR)

(74) Mandataire: Le Forestier, Eric
Cabinet Regimbeau,
26, avenue Kléber
75116 Paris (FR)

(54) **Système de régulation d'une tension d'alternateur**

(57) Système de régulation de la tension de sortie d'un alternateur destiné à alimenter le réseau de bord d'un véhicule et à charger une batterie (1) comportant un régulateur (3) qui commande le courant d'excitation dudit alternateur (2), caractérisé en ce que ledit régulateur (3) régule la tension de sortie de l'alternateur par rapport à une tension de référence qui ne varie pas en fonction de la température, ledit système comprenant en outre un module (4) à sonde (4a) mesurant la température de la batterie qui délivre sur l'entrée du régulateur (3) une tension ($V_{sense}$) fonction de la tension ($V_{BAT}$) de la batterie (1) et de la mesure de température de la sonde (4a), le régulateur (3) maintenant ladite tension ($V_{sense}$) sur une valeur constante, le module (4) étant tel que cette régulation impose à la tension ($V_{BAT}$) de la batterie (1) de varier selon la loi de régulation souhaitée.

FIG.2

## Description

La présente invention est relative aux systèmes pour la régulation de la tension de sortie d'un alternateur.

Classiquement, un alternateur a pour fonction d'alimenter le réseau de bord d'un véhicule, ainsi que de recharger la batterie de celui-ci lorsque le moteur thermique du véhicule tourne.

Or, le réseau de bord et la batterie du véhicule imposent des contraintes sur la tension délivrée par l'alternateur.

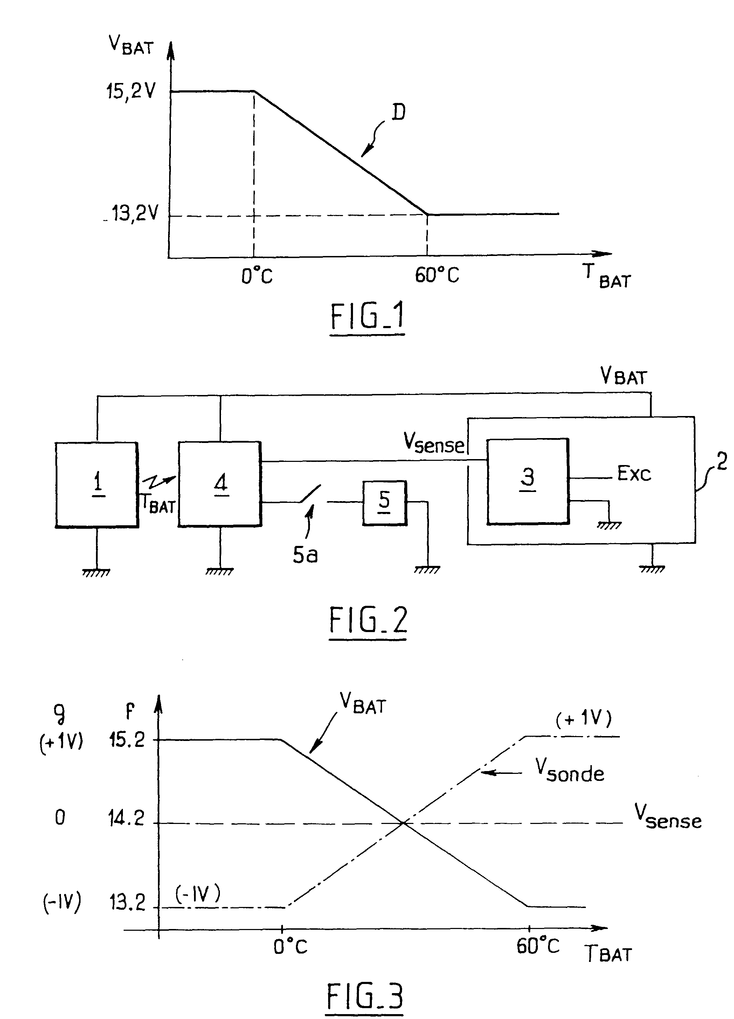

Celle-ci doit en effet généralement varier en fonction de la température selon par exemple une loi similaire à celle de la courbe illustrée sur la figure 1 qui représente le profil de charge idéal en fonction de la température pour une batterie au plomb.

Dans cet exemple, la charge optimale de la batterie impose à la tension de charge de varier linéairement en fonction de la température sur une droite de charge D de pente négative (-33 mV/°C, par exemple). On notera que le courant de charge varie fortement dès que la tension de charge s'écarte de cette droite optimale. Il est donc important que la tension de charge suive avec une grande précision cette droite optimale.

Par ailleurs, la tension délivrée en sortie de l'alternateur est limitée à une valeur supérieure $V_{sup}$ (généralement de l'ordre de 15 à 16 Volts, 15,2 Volts dans l'exemple de la figure 1) notamment par les éléments d'éclairage du véhicule lorsque ceux-ci utilisent des ampoules à filaments. Elle est en outre limitée à une valeur inférieure $V_{inf}$ (aux alentours de 13 Volts) par la force électromotrice à vide de la batterie.

Généralement, pour réaliser une régulation de ce type, on utilise des régulateurs qui agissent sur l'excitation du rotor de l'alternateur en fonction d'une part de la température mesurée par une sonde intégrée au régulateur de l'alternateur et d'autre part de la tension en sortie de l'alternateur ou de la tension de charge de la batterie.

Cette solution de régulation est économique, mais techniquement approximative.

En effet, l'alternateur et la batterie sont des pièces séparées, situées à des endroits différents dans le véhicule et la variation de température de la batterie est très lente tandis que celle de l'alternateur (et du régulateur) est très rapide.

Pour pouvoir correctement réguler la tension de charge de la batterie, il est souhaitable de connaître précisément la température de la batterie, ce qui n'est pas le cas avec les régulateurs classiques utilisant la température mesurée directement sur l'alternateur.

De plus, à ce jour, les régulateurs qui utilisent une mesure de la température de la batterie sont d'un coût élevé.

Un but de l'invention est de résoudre ce problème et de proposer une nouvelle structure de système de régulation permettant de réguler la tension délivrée par un alternateur en fonction de la température de la batterie.

A cet effet, l'invention propose un système de régulation de la tension de sortie d'un alternateur destiné à alimenter le réseau de bord d'un véhicule et à charger une batterie comportant un régulateur qui commande le courant d'excitation dudit alternateur, caractérisé en ce que ledit régulateur régule la tension de sortie de l'alternateur par rapport à une tension de référence qui ne varie pas en fonction de la température, ledit système comprenant en outre un module à sonde mesurant la température de la batterie qui délivre sur l'entrée du régulateur une tension fonction de la tension de la batterie et de la mesure de température de la sonde, le régulateur maintenant ladite tension sur une valeur constante, le module étant tel que cette régulation impose à la tension de la batterie de varier selon la loi de régulation souhaitée.

Comme on l'aura compris, un tel système peut utiliser un régulateur standard, présentant une compensation en température nulle, d'un faible coût.

En outre, la régulation qu'il réalise est particulièrement fiable, puisqu'elle prend directement en compte la mesure de la température de la batterie.

D'autres caractéristiques et avantages de l'invention ressortiront encore de la description qui suit. Cette description est purement illustrative et non limitative. Elle doit être lue en regard des dessins annexés sur lesquels :

- la figure 1, déjà analysée, est un graphe sur lequel on a porté la courbe de la tension de charge d'une batterie en fonction de la température dans le cas particulier d'une batterie au plomb ;
- la figure 2 est un schéma de principe d'un système de régulation conforme à un mode de réalisation possible pour l'invention ;
- la figure 3 est un graphe semblable à celui de la figure 1 sur lequel on a porté, outre la courbe de tension de charge, d'une part la tension $V_{sense}$ envoyée en entrée du régulateur de la figure 2 et d'autre part la courbe de la tension de sortie de la sonde de température du système de la figure 2 ;
- la figure 4 est un schéma d'un montage possible pour le module sonde du système de la figure 2 ;
- la figure 5 illustre la courbe de la tension en sortie du montage de la sonde du module de la figure 4.

Sur la figure 2, on a représenté schématiquement la batterie 1 d'un véhicule automobile, ainsi que son alternateur 2. Celui-ci délivre à la batterie 1 une tension de charge $V_{BAT}$.

Le système de régulation du montage de cette figure 2 comporte un régulateur standard 3, ainsi qu'un module 4 qui inclut une sonde qui mesure la température de la batterie 1.

On a également représenté sur la figure 2 une unité 5 pour l'alimentation de la sonde de ce module 4, ainsi qu'un interrupteur 5a pour la commande de cette alimentation.

Le module 4 transmet en entrée du régulateur 3 une tension "$V_{sense}$", qui est une combinaison linéaire de la tension de la batterie et d'une tension $V_{sonde}$ représentative de la température de celle-ci.

Ainsi :

$$V_{sense} = K_1 \, V_{BAT} + K_2 \, V_{sonde} \qquad (1)$$

où $K_1$ et $K_2$ sont des gains du montage du module 4.

Le régulateur 3 est programmé de façon à ce que sa compensation thermique soit nulle. Il agit sur l'excitation $E_{xc}$ du rotor de l'alternateur de façon à maintenir sa tension d'entrée $V_{sense}$ à un niveau constant, par exemple à 14,2 Volts ± 150 mvolts (tension de régulation habituellement utilisée à 25°C).

La tension de sortie $V_{BAT}$ de l'alternateur étant

$$V_{BAT} = (V_{sense} - K_2 \, V_{sonde})/K_1 \qquad (2)$$

le montage de la sonde du module 4 est tel que la loi de variation de la tension de sortie $V_{sonde}$ en fonction de la température permet d'obtenir la régulation souhaitée pour ladite tension $V_{BAT}$.

Par conséquent, le montage de la sonde doit présenter une fonction de transfert $g(V_{BAT}, T_{BAT})$, telle que si $f(V_{BAT}, T_{BAT})$ est la fonction de transfert à réaliser :

$$f(V_{BAT}, T_{BAT}) \circ g(V_{BAT}, T_{BAT}) = V_{sense} \qquad (3)$$

où $T_{BAT}$ désigne la température de la batterie relevée par la sonde et $\circ$ l'opération de convolution.

On a représenté sur la figure 3 la courbe de charge $V_{BAT}$ qui correspond à la fonction de transfert $f(V_{BAT}, T_{BAT})$ recherchée, ainsi que la tension $V_{sense}$ et une courbe $V_{sonde}$ qui correspond à une fonction de transfert $g(V_{BAT}, T_{BAT})$ permettant de vérifier l'équation (3).

Ainsi qu'on peut le voir sur cette figure 3, la tension $V_{sonde}$ varie linéairement entre les mêmes températures que la tension $V_{BAT}$ (de 0 à 60°C). Elle est croissante en fonction de la température d'un seuil inférieur de - 1 V à un seuil supérieur de + 1 V.

Le régulateur 3 est par exemple un régulateur monofonction de série, du type de ceux commercialisés par la Société VALEO EQUIPEMENTS ELECTRIQUES MOTEUR sous la référence YV77.

On notera en outre qu'à la fermeture de la clé de contact du véhicule, l'interrupteur 5a reste ouvert tant que le moteur thermique n'est pas suffisamment lancé pour que la tension de charge de la batterie soit en elle-même suffisante pour que la tension $V_{sense}$ atteigne sa valeur nominale.

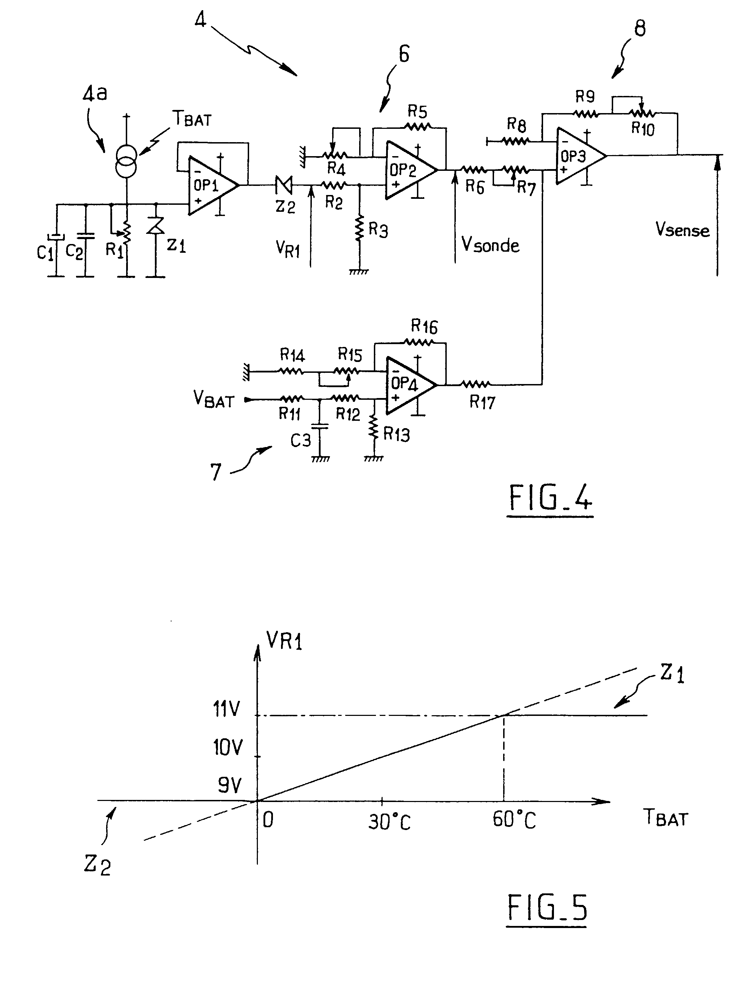

On a représenté sur la figure 4 un exemple d'un montage détaillé possible pour le module 4.

Le module 4 illustré sur cette figure comporte une sonde de température 4a qui délivre un courant dont l'intensité est linéairement croissante en fonction de la température.

Une telle sonde 4a est par exemple une sonde de température du type de celles commercialisées par la Société ANALOG DEVICE sous la référence AD 590 JH. Les sondes de ce type se comportent comme des sources de courant de 1 µA/°K, susceptibles de fonctionner entre - 55°C et + 150°C, avec une erreur relative de ± 0,5°C sur cette gamme. Elles peuvent être alimentées par une tension entre 4 et 30 Volts.

Dans l'exemple ici décrit, l'unité d'alimentation 5 est constituée par deux piles de 9 Volts.

La sonde 4a est montée entre une borne d'alimentation à la tension délivrée par l'unité 5 et un montage qui comporte quatre branches reliées à la masse en parallèle, l'une qui est constituée par une résistance $R_1$, une autre par une diode Zener $Z_1$ et les deux autres respectivement par des condensateurs $C_1$ et $C_2$. La diode $Z_1$ est passante de la masse vers la sonde 4a.

La tension au noeud commun de ces différentes branches et de la sonde 4a est envoyée sur l'entrée non inverseuse d'un amplificateur opérationnel $OP_1$ monté en suiveur de tension.

La sortie de cet amplificateur $OP_1$ est injectée dans un étage amplificateur 6, par l'intermédiaire d'une diode $Z_2$ qui est passante de cet étage amplificateur 6 vers la sortie de l'amplificateur $OP_1$.

Ainsi qu'on l'a illustré sur la figure 5, avec un tel montage, la tension $VR_1$ envoyée en entrée de l'étage amplificateur 6 est proportionnelle au courant de la source que constitue la sonde 4a. Elle croît donc linéairement en fonction de la température. La diode Zener Z1 permet quant à elle de limiter cette tension $V_{R1}$ à une valeur supérieure, tandis que la diode Zener $Z_2$ permet de limiter cette tension à une valeur seuil inférieur.

$R_1$ étant par exemple d'une valeur de 33 KΩ, cette tension d'entrée est de 9 Volts pour une température de batterie de 0°C et de 11 Volts pour une température de batterie de 60°C.

La résistance $R_1$ est avantageusement choisie variable, de façon à permettre le réglage de la pente de la variation de sa tension en fonction de la température.

Les condensateurs $C_1$ et $C_2$ permettent le filtrage et la stabilité de cet étage.

La diode Zener $Z_1$ est par exemple choisie avec une tension Zener de 11 Volts, $Z_2$ avec une tension Zener de 9 Volts.

Les condensateurs $C_1$ et $C_2$ sont par exemple choisis avec des valeurs de capacité de 22 nf et de 10 µf.

La tension $V_{sonde}$ en sortie de l'étage amplificateur 6 est envoyée sur une des entrées d'un étage sommateur 8, pour y être sommée avec une tension correspondant à la tension $V_{BAT}$, préalablement amplifiée par un étage amplificateur 7.

Les étages amplificateurs et sommateurs 6 à 8 vont maintenant être décrits.

Le montage amplificateur 6 comporte un amplificateur opérationnel $OP_2$ dont l'entrée non inverseuse est reliée d'une part à la diode $Z_2$ par une résistance $R_2$ (510 $\Omega$) et d'autre part à la masse par une résistance $R_3$ (1000 $\Omega$). La sortie de cet amplificateur opérationnel $OP_2$ est reliée à son entrée inverseuse par une résistance $R_5$ (100 K$\Omega$). Cette entrée inverseuse est également reliée à la masse par une résistance $R_4$ variable (de 12 à 22 K$\Omega$).

Le montage amplificateur 7 comporte un amplificateur opérationnel $OP_4$ dont l'entrée non inverseuse reçoit la tension $V_{BAT}$ par l'intermédiaire d'une résistance $R_{11}$ (33 K$\Omega$). L'extrémité de cette résistance $R_{11}$ qui est opposée à celle par laquelle est injectée la tension $V_{BAT}$ est reliée à un condensateur $C_3$ (47 nF) dont l'autre extrémité est à la masse, ainsi qu'à une résistance $R_{12}$ (680 K$\Omega$) dont l'autre extrémité est reliée à l'entrée non inverseuse de l'amplificateur opérationnel $OP_4$. Cette entrée non inverseuse est également reliée à la masse par l'intermédiaire d'une résistance $R_{13}$ (680 K$\Omega$). L'entrée inverseuse de cet amplificateur opérationnel $OP_4$ est reliée à la masse par l'intermédiaire d'une résistance $R_{14}$ (18 K$\Omega$) en série avec une résistance variable $R_{15}$ (de 0 à 20 K$\Omega$). Elle est reliée à la sortie dudit amplificateur opérationnel $OP_4$ par une résistance $R_{16}$ (33 K$\Omega$).

L'étage sommateur 8 comporte un amplificateur opérationnel $OP_3$ dont l'entrée non inverseuse est reliée d'une part à la sortie de l'amplificateur opérationnel $OP_4$ par une résistance $R_{17}$ (9,1 K$\Omega$) et d'autre part à la sortie de l'amplificateur opérationnel $OP_2$ par une résistance $R_6$ (27 K$\Omega$) en série avec une résistance variable $R_7$ (de 0 à 20 K$\Omega$). Son entrée inverseuse est reliée à la masse par une résistance $R_8$ (10 K$\Omega$), ainsi qu'à la sortie dudit amplificateur opérationnel $OP_3$ par une résistance $R_9$ (10 K$\Omega$) en série avec une résistance variable $R_{10}$ (de 0 à 10 K$\Omega$).

La tension en sortie dudit amplificateur opérationnel $OP_3$ est la tension $V_{sense}$.

La résistance $R_{10}$ est ajustée en fonction du gain recherché.

Les résistances $R_{15}$ et $R_4$ permettent également d'ajuster les gains $K_1$ et $K_2$.

La résistance $R_7$ permet d'ajuster un gain avant sommation.

La résistance $R_{11}$ et le condensateur $C_3$ assure le filtrage de la tension de la batterie.

Dans un autre mode de réalisation, au lieu d'alimenter le module 4 en 18 Volts, ce qui oblige à utiliser deux piles de 9 Volts, le module 4 est alimenté en 9 Volts, ce qui permet d'utiliser l'alternateur et/ou la batterie pour l'alimentation de la sonde.

Dans ce cas, la tension nominale $V_{sense}$ maintenue constante par le régulateur est une valeur divisée par deux par rapport à celle qui a été indiquée dans la description qui précède, c'est-à-dire de l'ordre de 7 Volts. Il suffit, pour réaliser cela, de modifier de manière appropriée les valeurs des résistances de réglage du module 4 et d'utiliser une valeur de référence divisée par deux dans le régulateur 3.

Au lieu de diviser par deux la tension d'alimentation du module 4, on peut aussi la diviser, ainsi que les autres variables, par un autre facteur compris entre 1 et 10.

D'autres modes de réalisation que celui qui vient d'être décrit sont bien entendu possibles pour l'invention.

Notamment, d'autres types de compensation thermique peuvent être envisagés sur le module sonde.

Egalement, le module 4 peut comporter des moyens pour inhiber le régulateur lorsque la tension de la batterie devient supérieure à une tension seuil donnée, par exemple à 16 Volts.

Par ailleurs, le régulateur 3 peut également présenter une entrée secondaire reliée à la batterie par l'intermédiaire de la clé de contact du véhicule et d'une lampe témoin et qui permet la régulation en mode dégradé de la tension de la batterie par ledit régulateur 3, dans le cas où l'entrée de la tension $V_{sense}$ est défaillante.

Dans les modes de réalisation décrits ci-dessus, le module 4 a été réalisé à l'aide de composants analogiques mais il va de soi que celui-ci peut être réalisé à l'aide de processeurs numériques, la liaison entre le module 4 et le régulateur 3 étant dans ce cas réalisée à l'aide d'un bus de données.

## Revendications

1. Système de régulation de la tension de sortie d'un alternateur destiné à alimenter le réseau de bord d'un véhicule et à charger une batterie (1) comportant un régulateur (3) qui commande le courant d'excitation dudit alternateur (2), caractérisé en ce que ledit régulateur (3) régule la tension de sortie de l'alternateur par rapport à une tension de référence qui ne varie pas en fonction de la température, ledit système comprenant en outre un module (4) à sonde (4a) mesurant la température de la batterie qui délivre sur l'entrée du régulateur (3) une tension ($V_{sense}$) fonction de la tension ($V_{BAT}$) de la batterie (1) et de la mesure de température de la sonde (4a), le régulateur (3) maintenant ladite tension ($V_{sense}$) sur une valeur constante, le module (4) étant tel que cette régulation impose à la tension ($V_{BAT}$) de la batterie (1) de varier selon la loi de régulation souhaitée.

2. Système selon la revendication 1, caractérisé en ce que le module (4) est tel que la tension qu'il délivre en entrée du régulateur (3) est une combinaison linéaire de la tension ($V_{BAT}$) de la batterie (1) et d'une tension ($V_{sonde}$) en sortie d'un montage de sonde (4a), qui varie en fonction de la température de la batterie.

3. Système selon la revendication 2, caractérisé en ce que le module (4) comporte un premier montage amplificateur (6) qui reçoit la tension ($V_{R1}$) en sortie du montage de sonde (4a), un deuxième montage amplificateur (7) qui reçoit la tension de la batterie, ainsi qu'un montage sommateur (8) qui reçoit les tensions en sortie du premier et du deuxième montage amplificateur.

4. Système selon l'une des revendications 2 et 3, caractérisé en ce que la tension en sortie du montage de la sonde (4a) croît linéairement en fonction de la température entre deux tensions seuils.

5. Système selon la revendication 4, caractérisé en ce que la tension en sortie du montage de la sonde correspond à la tension aux bornes d'une branche ($R_1$) principalement résistive alimentée par le courant de la source de courant que constitue la sonde (4a).

6. Système selon la revendication 5, caractérisé en ce que la résistance de ladite branche ($R_1$) peut être variée pour ajuster la pente de la variation de la tension ($V_{sonde}$) en sortie du montage de la sonde (4a) en fonction de la température.

7. Système selon l'une des revendications 5 et 6, caractérisé en ce que ladite branche résistive ($R_1$) est montée en parallèle avec une diode Zener ($Z_1$) qui définit la tension seuil supérieure de ladite tension en sortie du montage de la sonde (4a).

8. Système selon la revendication 7, caractérisé en ce qu'il comporte en outre une deuxième diode Zener ($Z_2$) qui définit la tension seuil inférieure de la tension en sortie du montage de la sonde (4a).

9. Système selon l'une des revendications précédentes, caractérisé en ce que la sonde (4a) de température est alimentée par l'alternateur et/ou la batterie du véhicule, la valeur de la tension maintenue constante par le régulateur (3) étant environ égale à la valeur moyenne de la tension ($V_{BAT}$) souhaitée de la batterie divisée par un facteur k compris entre 1 et 10.

10. Système selon l'une des revendications précédentes, caractérisé en ce que le module (4) comporte des moyens pour inhiber le régulateur (3) lorsque la tension de la batterie devient supérieure à une tension seuil donnée.

11. Système selon l'une des revendications précédentes, caractérisé en ce que le régulateur (3) présente une entrée secondaire reliée à la batterie qui permet la régulation en mode dégradé de la tension de la batterie dans le cas où le module (4) est défaillant.

FIG_1

FIG_2

FIG_3

6

FIG.4

FIG.5

7

Office européen
des brevets

**RAPPORT DE RECHERCHE EUROPEENNE**

Numéro de la demande

EP 97 40 2133

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int.Cl.6) |
| A | EP 0 335 085 A (NIPPON DENSO CO) 4 octobre 1989 <br> * abrégé * <br> --- | 1-11 | H02J7/14 |
| A | FR 2 572 860 A (PARIS & DU RHONE) 9 mai 1986 <br> * abrégé; figure 1 * <br> ----- | 1-11 | |

DOMAINES TECHNIQUES RECHERCHES (Int.Cl.6)

H02J

Le présent rapport a été établi pour toutes les revendications

| Lieu de la recherche | Date d'achèvement de la recherche | Examinateur |
|---|---|---|
| LA HAYE | 19 décembre 1997 | Moyle, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)